# EUROPÄISCHE PATENTSCHRIFT

(11) **EP 2 141 189 B1**
(45) Veröffentlichungstag und Bekanntmachung des Hinweises auf die Patenterteilung: **01.06.2016**
(21) Anmeldenummer: 09008652.1
(22) Anmeldetag: 02.07.2009
(51) Int. Cl.: C08J 3/22, C08J 3/205, C08J 5/00, C08J 5/24, C08K 3/22, C09C 1/02, C09C 3/08, C09C 3/10, C09C 3/12

(54) **Verfahren zum Herstellen von aushärtbaren Massen, enthaltend nanoskalige, gecoatete, desagglomerierte und bevorzugt funktionalisierte Magnesiumhydroxidpartikel, sowie von ausgehärteten thermoplastischen oder duroplastischen Polymeren bzw. Kompositen, enthaltend desagglomerierte und homogen verteilte Magnesiumhydroxidfüllstoffpartikel**
Method of producing large-scale nano-scale, coated, disagglomerated and preferably functionalised magnesium hydroxide particles containing aneallable masses and hardened thermoplastic or duroplastic polymers or composites contained disagglomerated and homogenously distributed magnesium hydroxide filling particles.
Procédé de fabrication de masses durcissables contenant des particules d'hydroxyde de magnésium nano-échelle, revêtues, désagglomérées, et de préférence fonctionnalisées, ainsi que particules d'agents de remplissage d'hydroxyde de magnésium réparties de manière homogène et désagglomérées à partir de polymères ou de composites durcis thermoplastiques ou duroplastiques

(30) Priorität: 04.07.2008 DE 102008031360
(43) Veröffentlichungstag der Anmeldung: 06.01.2010
(73) Patentinhaber: K+S Aktiengesellschaft, 34131 Kassel (DE)
(72) Erfinder: Glende, Christopher David, 37574 Einbeck (DE); Dressel, Stefan, Dr, 34128 Kassel (DE); Stahl, Ingo, Prof. Dr., 34246 Vellmar (DE)

(56) Entgegenhaltungen:
- EP-A2- 0 243 201
- DE-A1- 10 357 116
- DE-A1-102005 025 719
- US-A- 4 698 379
- US-A- 5 139 875
- US-A1- 2007 176 155
- US-A1- 2008 021 161
- US-B1- 6 500 882
- DATABASE WPI Week 200782 Thomson Scientific, London, GB; AN 2007-883658 XP002678206, & CN 1 978 471 A (TIANJIN BOTIAN CHEM IND CO LTD) 13. Juni 2007 (2007-06-13)

## Beschreibung

Die vorliegende Erfindung betrifft ein Verfahren zum Herstellen von aushärtbaren Massen, enthaltend nanoskalige, gecoatete, desagglomerierte und homogen verteilte Magnesiumhydroxidpartikel. Auch betrifft die vorliegende Erfindung ein Verfahren zur Verarbeitung von nanoskaligen, vorzugsweise pregecoateten Magnesiumhydroxidpartikeln als Suspension oder Dispersion in einem wässrigen Lösungsmittel, welche auch gegebenenfalls getrocknet vorliegen können. Auch kann nach der Trocknung der Suspension oder Dispersion und einem erneuten Resuspendieren/Dispergieren in einem organischen Lösungsmittel unter Zugabe eines Dispergiermittels D in einem zweiten Verfahrensschritt eine Desagglomeration mittels einer Perlmühle oder einer Ultraschallbehandlung folgen. Anschließend können die hergestellten Dispersionen in wässrigem oder organischem Lösungsmittel in eine Komponente einer aushärtbaren Masse eingearbeitet werden. Des weiteren richtet sich die vorliegende Erfindung auf ein Verfahren zum Herstellen eines ausgehärteten Polymerwerkstoffes. Schließlich stellt die vorliegende Erfindung aushärtbare Massen, daraus hergestellte Polymerwerkstoffe, insbesondere Duroplaste oder Thermoplaste sowie Kompositmaterial enthaltend erfindungsgemäß hergestellte aushärtbare Massen oder Polymerwerkstoffe in Kombination mit Verstärkungsmitteln, bereit.

### Stand der Technik

Es ist allgemein bekannt, dass Füllstoffe in Kunststoffen zur Modifizierung der Eigenschaften eingebracht werden. Diese Füllstoffe können sowohl hinsichtlich ihrer Teilchengröße grobskalig als auch nanoskalig sein und liegen üblicherweise als getrocknete Pulver vor.

Kompositmaterialien in einer Epoxidharzmatrix sind beispielsweise im Flugzeugbau, in der Raumfahrt - z.B. für Satelliten -, für den Fahrzeugbau, im Bootsbau, für den Gebäudebau, im Eisenbahnbau, für Schwungräder und für Druckgefäße einsetzbar. Beispielhaft werden solche Möglichkeiten in der U.S.-Patentanmeldung 2003/0064228 und EP 1 094 087 beschrieben. Weitere Beispiele für Kompositmaterialien für Rotoren für Windkraftanlagen werden in Kunststoffe, Heft 11 (2002), Seiten 119-124, ausgeführt.

In der WO 2005/054357 werden nanoskalige Bariumsulfate beschrieben. Diese werden im desagglomerierten Zustand in Epoxidharze eingebracht und ermöglichen eine Verbesserung der Schlagbiegefestigkeit und der Bruchdehnung. Die in dieser Anmeldung beschriebenen Nanopartikel auf Basis von Bariumsulfat sind mit einem Polyethercarboxylat modifiziert, das zur Reaktion mit dem Epoxidharz terminale Hydroxygruppen aufweist. Diese sind für die Reaktion mit dem Epoxidharz ungünstig, da die genannten Hydroxygruppen reaktionsträge mit den Epoxy-Gruppen des Harzes reagieren und somit eine Ankopplung der Nanopartikel an das Epoxidharz nur bedingt gegeben ist.

Die in der WO 2005/054357 beschriebenen Epoxidharze werden zum Beispiel als Leichtbauwerkstoffe in Windkraftanlagen, Rohren, Behältern usw. eingesetzt. Allerdings ermöglichen die in dem Dokument genannten funktionalen Gruppen nicht die vollständige Anbindung der Füllstoffe an die Harze. Des weiteren besteht ein Bedürfnis, verbesserte Compoundwerkstoffe bereitzustellen, die eine erhöhte Bruchdehnung und Schlagbiegefestigkeit bei gleichzeitiger Erhöhung des E-Moduls ermöglichen.

Schließlich besteht ein permanenter Bedarf nach immer leichteren Materialien, um entsprechende Werkstoffe herzustellen, wobei diese möglichst kostengünstig produzierbar sein sollten.

In der WO 2005/054357 wird das beschriebene Bariumsulfat entweder in getrockneter Form, oder als wässrige Suspension verwendet. Zur Einarbeitung in Harze, aus denen duroplastische oder thermoplastische Werkstoffe entstehen, wurden mittels eines Intensivrührers oder eines Ultraturrax die Gemische aus getrocknetem und gemahlenem Füllstoff mit dem Harz oder Härter vermischt und homogenisiert und anschließend durch Zugabe der jeweils anderen Komponente polymerisiert. Bei solchen thermo- oder duroplastischen Materialien, bei denen der nanoskalige getrocknete Füllstoff in pulvriger Form mittels eines Dissolvers oder eines Ultraturrax intensiv mit dem Harz vermischt wird, kann lediglich ein Bruchteil der Agglomerate der Bariumsulfatagglomerate zerstört werden. In beiden beschriebenen Fällen reichen die eingebrachten Scherkräfte nicht für eine vollständige Desagglomerierung der nanoskaligen Füllstoffe aus.
Dadurch werden nach Härtung polymere Werkstoffe erhalten, die agglomerierte Nanopartikel in Mikrometerbereich mit dem mechanischen Eigenschaftsprofil von grobskaligen Füllstoffen aufweisen.

Magnesiumhydroxid und Aluminiumtrihydroxid werden in verschiedensten Polymeren als halogenfreie mineralische Brandschutzmittel eingesetzt. Diese Füllstoffe werden grobskalig mit Füllstoffgehalten von mindestens 50 Gew.-% in Polymeren eingesetzt. Mit einem Füllstoffgehalt von mindestens 50 Gew.-%, z.B. mit Gehalten von 55 bis 65 Gew.-%, lässt sich, je nach Polymer, nach dem von Underwriter Laboratory in den USA entwickelten Brandschutztest UL94 die Brandklasse V0 erreichen - allerdings leiden die mechanischen Eigenschaften des Kunststoffes deutlich unter dem hohen anorganischen Füllstoffgehalt. Häufig tritt ein Verspröden des Kunststoffs ein, der verbunden ist mit einem geringeren Impact-Vermögen und geringen Reißdehnungswerten.

Zu der Thematik "nanoskaliges Magnesiumhydroxid als Flammschutzmittel in Polymeren" existiert bereits eine Vielzahl an Veröffentlichungen. So beschreibt beispielsweise die WO 99/08962 die Nassmahlung einer Magnesiumhydroxid-Slurry unter Zugabe von kationischen Polymeren als Dispergiermittel. Allerdings wird bei diesem Verfahren weder das Anpassen der Polarität der Partikel an die polymere Zielmatrix für eine spätere bessere Einarbeitung in Polymere, noch ein Funktionalisieren der Partikel zur Optimierung der mechanischen Eigenschaften offenbart. Auch ist der in diesem Dokument beschriebene Gehalt an Dispergiermittel sehr gering.

In der US 2004/074361 wird ein Coaten von grobskaligen Magnesiumhydroxidagglomeraten mit zum Teil reaktiven Additiven, wie funktionalisierten Silanen, beschrieben. Auch hier wird als Ausgangssubstanz trockenes und somit agglomeriertes Pulver von Magnesiumhydroxid verwendet, so dass auch hier lediglich die Agglomerate gecoatet werden. Schließlich beschreibt die WO 2002/081574 ein Coaten von Magnesiumhydroxid-Pulver in einem Henschel-Mischer mit Aminosilanen, Titanaten, Zirkonaten und Fettsäuren und der anschließenden Einbringung in Polyamide. Allerdings werden bei diesen Verfahren lediglich Agglomerate gecoatet, nicht Primärpartikel, und die anschließende Einbringung in Polymere erfolgt nicht desagglomeriert.

Alle im Stand der Technik genannten Dokumente beschreiben die Einarbeitung von agglomerierten Magnesiumhydroxidpartikeln, die aus grob- und/oder nanoskaligen Primärpartikeln bestehen. Sie werden zwar als nanoskalig bezeichnet und als Füllstoffe eingesetzt, doch liegen diese bedingt durch den Trocknungsprozess agglomeriert im Mikrometermaßstab vor, so dass die mechanischen Eigenschaften des gefüllten Polymers denen eines mit grobskaligem Magnesiumhydroxid gefüllten Kunststoffes ähneln. Der Trocknungsschritt bewirkt ein Agglomerieren der nanoskaligen Partikel, die später nicht durch die mechanische Bearbeitung z.B. mit einem Ultraturrax oder einem Dissolver vollständig desagglomeriert werden können. Auch für solche Anwendungen und Materialien ist es wünschenswert, ein Verfahren zur Herstellung von Polymerwerkstoffen bereitzustellen, die neben einer erhöhten Bruchdehnung und Schlagbiegefestigkeit eine gleichzeitige Erhöhung des E-Moduls gewährleisten.

Der vorliegenden Erfindung liegt die Aufgabe zugrunde, Verfahren bereitzustellen, welche nanoskalige, desagglomerierte und gegebenenfalls funktionalisierte und homogen verteilte Magnesiumhydroxidpartikel enthaltende aushärtbare Massen und/oder ausgehärtete Massen liefern. Erst dadurch wird die Herstellung von nanoskalig, desagglomerierten Polymerwerkstoffen mit einem signifikant verbesserten mechanischen Eigenschaftsprofil ermöglicht. Eine weitere Aufgabe der vorliegenden Erfindung ist die Bereitstellung von solchen desagglomeriert gefüllten aushärtbaren Massen als Vorstufe von Polymerwerkstoffen sowie die Bereitstellung von solchen Polymerwerkstoffen, insbesondere Duroplasten oder Thermoplasten selbst.

Schließlich ist eine weitere Aufgabe der vorliegenden Erfindung die Bereitstellung von Kompositmaterialien, enthaltend solche desagglomeriert gefüllten Polymerwerkstoffe in Kombination mit Verstärkungsmitteln, wie z.B. Glas-, Kohle- oder Kevlarfasern.

Die genannten Polymerwerkstoffe zeichnen sich durch eine Verbesserung der mechanischen Eigenschaften aufgrund einer verbesserten Partikelverteilung und der verbesserten Ankopplung der Füllstoffe im Polymer aus.

### Ausführliche Beschreibung der Erfindung

Es wurde überraschend festgestellt, dass Magnesiumhydroxid in nanoskaliger, gecoateter, desagglomerierter Form die obigen Anforderungen erfüllt. Insbesondere in Verbindung mit diesem neuen Verfahren zum Einbringen des Magnesiumhydroxids als Füllstoff in die aushärtbare Masse ist es möglich, Polymerwerkstoffe mit verbesserten mechanischen Eigenschaften bereitzustellen.

In einem ersten Aspekt richtet sich die vorliegende Erfindung auf ein Verfahren zum Herstellen von aushärtbaren Massen, enthaltend nanoskalige, gecoatete, desagglomerierte und gegebenenfalls funktionalisierte Magnesiumhydroxidpartikel, umfassend die Schritte
a) Bereitstellen von nanoskaligen, einzeln pregecoateten Magnesiumhydroxidpartikeln in getrockneter Form,
b) Suspendieren oder Dispergieren der Magnesiumhydroxidpartikel in einem organischen Lösungsmittel,
c1) Behandeln der Suspension oder Dispersion mit Ultraschall in Anwesenheit von einem Dispergiermittel D, oder alternativ,
c2) Perlmahlung der Suspension oder Dispersion in Anwesenheit von einem Dispergiermittel D,
d1) Vermischen der im Schritt c1) erhaltenen Dispersion enthaltend desagglomerierte, nanoskalige, mehrfach gecoatete und gegebenenfalls funktionalisierte Magnesiumhydroxidpartikel, mit einer Komponente einer aushärtbaren Masse, oder alternativ,
d2) Vermischen der im Schritt c2) erhaltenen Dispersion enthaltend desagglomerierte, nanoskalige, einfach oder mehrfach gecoatete und gegebenenfalls funktionalisierte Magnesiumhydroxidpartikel mit einer Komponente einer aushärtbaren Masse.

In einem zweiten Aspekt richtet sich die vorliegende Erfindung auf ein Verfahren zum Herstellen von gefüllten Polymerdispersionen, enthaltend nanoskalige, gecoatete, desagglomerierte und gegebenenfalls Magnesiumhydroxidpartikel, umfassend die Schritte
a) Bereitstellen von nanoskaligen, einzeln pregecoateten Magnesiumhydroxidpartikeln als Suspension oder Dispersion in einem wässrigen Lösungsmittel enthaltend Dispergiermittel B oder in getrockneter Form;
b) Gegebenenfalls Dispergieren oder Suspendieren der Magnesiumhydroxidpartikel in getrockneter Form in einem wässrigen Lösungsmittel,
c1) Perlmahlung der Suspension oder Dispersion in Anwesenheit von einem Dispergiermittel B, oder alternativ,
c2) Behandeln der Suspension oder Dispersion mit Ultraschall in Anwesenheit von Dispergiermittel B,
d1) Vermischen der im Schritt c1) erhaltenen Dispersion enthaltend desagglomerierte, nanoskalige, einfach oder mehrfach gecoatete und gegebenenfalls funktionalisierte Magnesiumhydroxidpartikel mit einer wässrigen Polymerdispersion,
d2) Vermischen der im Schritt c2) erhaltenen Dispersion enthaltend desagglomerierte, nanoskalige, mehrfach gecoatete und gegebenenfalls funktionalisierte Magnesiumhydroxidpartikel, mit einer wässrigen Polymerdispersion, e) Ausbilden des Polymers aus der im Schritt d1) und d2) so erhaltenen Polymerdispersion.

Die Magnesiumhydroxidpartikel-Dispersionen, welche nach Verfahrensschritt c1) oder c2) hergestellt wurden, weisen einen Feststoffgehalt von 20-70 Gew.-% an Magnesiumhydroxid auf.

Der Ausdruck "desagglomeriert", wie er vorliegend verwendet wird, bedeutet, dass die Sekundärpartikel nicht vollständig in Primärpartikel zerkleinert vorliegen, sondern dass diese deutlich weniger agglomeriert oder aggregiert vorliegen als nach einem Trocknungsschritt von nicht gecoateten Primärpartikeln. Dadurch, dass jeder Primärpartikel beschichtet vorliegt, ist ein vollständiges Desagglomerieren leichter möglich.

Vorliegend wird unter dem Ausdruck "grobskalig" solche Teilchengrößenverteilungen verstanden, deren mittlerer Partikeldurchmesser (d50) größer 100 nm ist. D. h. Partikel bei denen zu größer 50 %, wie größer 70 %, 80 %, insbesondere größer 90 %, wie 95 % und insbesondere 98 % der Partikeldurchmesser größer 100 nm ist, werden als grobskalige Partikel bezeichnet.

"Nanoskalig" sind Teilchengrößenverteilungen, deren mittlerer Partikeldurchmesser (d50) ≤ 100 nm ist. D. h. Partikel bei denen zu größer 50%, wie größer 70%, 80%, insbesondere größer 90%, wie 95% und insbesondere 98% der Partikeldurchmesser ≤100 nm ist, werden als nanoskalige Partikel bezeichnet.

Die im Schritt a) bereitgestellten nanoskaligen, pregecoateten Magnesiumhydroxidpartikel werden dabei erhalten, indem eine Magnesiumsalzlösung mit einer Alkalihydroxidlösung unter Bildung eines Reaktionsgemisches zur Fällung von gecoateten Magnesiumhydroxidprimärpartikeln in Kontakt gebracht wird, wobei in mindestens einer - der Magnesiumsalzlösung oder Alkalihydroxidlösung - mindestens eines der Additive A, B und/oder C enthalten ist oder bei in Kontakt bringen einer der beiden Lösungen mindestens eines der vorliegenden Additive A, B und/oder C gleichzeitig mit dem sich aus den beiden Lösungen ergebenden Reaktionsgemisches in Kontakt gebracht wird, wobei die Additive ein Wachstumsinhibitor A, ein Dispergiermittel B und/oder in der wässrigen Fettsäurelösung C oder Mischungen hiervon sind. Dadurch ist die Herstellung von pregecoateten Magnesiumhydroxidpartikeln möglich, wobei sich die Magnesiumhydroxidpartikel dadurch auszeichnen, dass jeder einzelne der Magnesiumhydroxid-Primärpartikel vollständig gecoatet ist, da sich bereits während des Fällungsprozesses aufgrund des Vorhandenseins der genannten Additive ein Coating der Oberfläche auf jedem einzelnen Primärpartikel ausbildet. Diese nanoskaligen, gecoateten, desagglomerierten Magnesiumhydroxidpartikel können in getrockneter Form oder in Form einer Suspension/Dispersion als Ausgangsmaterial bereitgestellt werden.

Anschließend wird als Desagglomerierungsprozess eine Behandlung mittels Perlmühle oder Ultraschall durchgeführt, bei der jeder Partikel durch Zugabe von geeigneten Additiven bzw. Additivgemischen ein eigenes, ggf. weiteres, Oberflächencoating erhält. Diese Perlmahlung oder Ultraschallbehandlung erfolgt dabei in einem Lösungsmittel und unter der Zugabe eines geeigneten Dispergiermittels. Bei Verwendung eines organischen Lösungsmittels wird ein Dispergiermittel D eingesetzt, während bei Verwendung eines wässrigen Lösungsmittels ein Dispergiermittel B verwendet wird. Die bei dem Desagglomerierungsprozess mittels Perlmühle oder Ultraschall entstehenden nanoskaligen Partikel aus Magnesiumhydroxid werden durch die Zugabe von Dispergiermittel B bei einem wässrigen Lösungsmittel bzw. Dispergiermittel D bei einem organischen Lösungsmittel elektrostatisch und/oder sterisch stabilisiert und somit vor einer Reagglomeration geschützt. Die Polarität der Partikel wird ebenfalls durch geeignete Dispergiermittel B bzw. Dispergiermittel D, den Coatings, auf die spätere polymere Zielmatrix angepasst. Somit wird ein späteres Einarbeiten in Polymere erleichtert. Das Coating wirkt auch als Abstandshalter (Spacer), da sich die Kristallflächen der nanoskaligen Partikel nicht berühren können und ein Zusammenwachsen der nanoskaligen Partikel zu größeren Aggregaten verhindert wird. Somit wird die Bildung fester Aggregate verhindert. Auch können die bei den Desagglomerierungsschritten zugegebenen Dispergiermittel B und Dispergiermittel D bereits funktionelle Gruppen tragen, welche die nanoskaligen Partikel später kovalent an die polymere Zielmatrix anbinden können, um eine signifikante Verbesserung der mechanischen Eigenschaften der polymeren Wirkstoffe zu ermöglichen.

Ein wesentlicher Aspekt des erfindungsgemäßen Verfahrens dabei ist, dass die nanoskaligen, gecoateten, desagglomerierten und funktionalisierten Magnesiumhydroxidpartikel nicht als getrocknetes Pulver, bei dem diese Partikel agglomeriert vorliegen, sondern als desagglomerierte, gecoatete und funktionalisierte Partikel, bevorzugt vereinzelte Primärpartikel, als Suspension oder Dispersion verwendet werden. Zur Herstellung der polymeren Wirkstoffe, insbesondere der Thermoplaste oder Duroplaste, wird diese Suspension oder Dispersion mit den Monomeren, Oligomeren oder alternativ mit dem Härter vermischt und anschließend durch die Zugabe des Härters bzw. der Monomere/Oligomere (Harz-Komponente) und der weiteren Zusatzstoffe polymerisiert.

Ein weiterer Vorteil des vorliegenden Verfahrens ist es, dass bei dem anschließend beschriebenen Zerkleinerungsverfahren mittels Perlmahlung oder Ultraschall als Ausgangsmaterial nicht herkömmliches, kommerziell erhältliches Magnesiumhydroxid verwendet wird, sondern pregecoatetes Material, wie vorgenannt, ausgeführt. Dieses pregecoatete Magnesiumhydroxid hat den Vorteil gegenüber herkömmlichem Material, dass bei den Zerkleinerungsprozessen durch Perlmahlung oder Ultraschall lediglich lockere Agglomerate von Primärpartikeln desagglomeriert werden müssen, da durch das oben beschriebene in-situ-Verfahren zur Herstellung der Magnesiumhydroxidpartikel bereits diese erhaltenen Primärpartikel vollständig gecoatet sind und somit ein festes Aggregieren und Zusammenwachsen der Kristallflächen bereits bei der Fällung verhindert wurde. Bei herkömmlichem Material als Ausgangsmaterial handelt es sich hingegen um tatsächlich mechanische Zerkleinerungsprozesse, bei denen die Aggregate aufgebrochen werden müssen. Dies ist sowohl energetisch als auch zeitlich deutlich aufwendiger. Auch lassen sich mit pregecoatetem Material deutlich geringere Teilchengrößenverteilungen mittels Perlmahlung oder Ultraschall erreichen. Herkömmliches Material mittels Ultraschall zu zerkleinern bedarf hoher Energie und würde die erfindungsgemäßen Vorteile des Einsatzes der Ultraschallbehandlung nicht gewährleisten.

Das als Ausgangsmaterial verwendete Magnesiumhydroxid weist eine deutlich geringere Dichte im Vergleich zu Bariumsulfat, wie es im Stand der Technik verwendet wird, auf. Somit können signifikant leichtere Kompositmaterialien als fertige Bauteile erstellt werden. Solche Leichtbauwerkstoffe auf Polymerbasis finden in verschiedenen Bereichen, wie z.B. im Flugzeug-, Fahrzeug- oder Schienenbau Anwendung. Des Weiteren sind die Ausgangsmaterialien zur Herstellung der Magnesiumhydroxidnanopartikel im Vergleich zu Bariumsulfatpartikeln kostengünstiger und erlauben somit die Herstellung von kostengünstigeren Endprodukten. Gegenüber Bariumsulfat hat die Verwendung von Magnesiumhydroxid den weiteren Vorteil, dass die Nanopartikel aufgrund des eingeschlossenen Kristallwassers im Falle eines Brandes durch ihre große Oberfläche ihr Kristallwasser besonders schnell abgeben können, somit eine Kühlung des Polymers zügig eintritt und sich eine anschließend schützende Oxidschicht ausbilden kann. Dadurch eignen sich die erfindungsgemäßen Polymerwerkstoffe insbesondere auch als Brandschutzmittel. Als weiterer Vorteil des erfindungsgemäßen Verfahrens ist zu nennen, dass durch Verwendung von sterisch stabilisierenden Additiven, insbesondere funktionalisierten Additiven, diese die Kopplung der Magnesiumhydroxidpartikel mit dem Härter oder dem Harz vereinfachen. Somit wird eine vollständige Anbindung der Nanopartikel mit der Polymermatrix erst ermöglicht.

Schließlich ist der ökonomische Aspekt zu berücksichtigen. Insbesondere durch Einsatz von Ultraschall kann eine kostengünstige Produktion von nanoskalig gefüllten aushärtbaren Massen und somit Polymerwerkstoffen sowie Kompositmaterialien im großen Maßstab erreicht werden.

Als Ausgangsmaterial kann wie gesagt das grobskalige oder nanoskalige Magnesiumhydroxid verwendet werden, was gemäß den oben beschriebenen Verfahren hergestellt wurde, deren Primärpartikel eine Vorbeschichtung (precoating) mit dem Wachstumsinhibitor A, dem Dispergiermittel B und/oder der wässrigen Stearatlösung C aufweisen kann. In Abhängigkeit von dem eingesetzten Additiv kann die in dem ersten Verfahrensschritt - der In-situ-Fällung - erhaltene Suspension oder Dispersion direkt einem zweiten Verfahrensschritt - der Perlmahlung oder der Ultraschallbehandlung - unterworfen werden, in dem nanoskalige, gecoatete und gegebenenfalls funktionalisierte wässrige Dispersionen entstehen. Auch kann nach dem ersten Verfahrensschritt ein Trocknungsprozess durchgeführt werden, wenn in einem organischen Lösungsmittel weitergearbeitet werden soll. Dieses Trocknen kann zum Beispiel durch Sprühtrocknung geschehen. Wird das so hergestellte pregecoatete Magnesiumhydroxid sprühgetrocknet, entsteht ein agglomeriertes nanoskaliges Magnesiumhydroxid-Pulver, das entsprechend mit dem Wachstumsinhibitor A, dem Dispergiermittel B und/oder der wässrigen Stearatlösung C gecoatet ist.

Dieses Pulver kann in einem wässrigen oder organischen Lösungsmittel mittels einer Perlmühle oder einer Behandlung mit Ultraschall unter Zuhilfenahme von geeigneten sterisch stabilisierenden Dispergiermittel B bzw. Dispergiermittel D desagglomeriert werden. Als Ergebnis werden lagerstabile nanoskalige Magnesiumhydroxid-Dispersionen in entweder wässrigen oder organischen Lösungsmitteln erhalten. Diese Dispersionen können dann in die Komponente(n) der aushärtbaren Masse, wie Monomere/Oligomere (Harz) oder dem Härter, eingearbeitet werden, aus denen dann die polymeren Werkstoffe, insbesondere die Thermoplasten oder Duroplasten, hergestellt werden können.

Das Dispergiermittel B weist eine oder mehrere anionische Gruppen in seinem Molekül auf. Es kann z.B. niedermolekular, monomer, oligomer oder als Polymer vorliegen. Das Dispergiermittel B kann auch als Salz dieser Verbindung eingesetzt werden, wobei die mit einer oder mehreren anionischen Gruppen enthaltende Hauptkette auch verzweigt oder zyklisch sein kann mit hydrophoben und/oder hydrophilen Teilstrukturen. Diese anionischen Gruppen, z.B. Carboxy-, Phosphonat-, Phosphat-, Sulfonat- oder Sulfatgruppen, bewirken eine anionische Kopplung des Additivmoleküls auf der Füllstoffoberfläche, da diese in Wechselwirkungen mit der Magnesiumhydroxidoberfläche treten können. Die daneben zusätzlich vorhandenen oligomeren oder polymeren Haupt- und gegebenenfalls zusätzlichen Seitenketten erlauben eine weitere elektrostatische und/oder sterische Stabilisierung und verhindern somit eine Reagglomeration. Die Seitenketten können aus halbpolaren und/oder hydrophilen Teilstrukturen bestehen. Zusätzlich verleihen sie den Partikeln eine äußere Polarität, die je nach Dispergiermittel B das Partikel hydrophiler oder hydrophober erscheinen lässt und durch diese Anpassung der Polarität später ein leichteres Einbringen in eine Polymermatrix ermöglicht und eine Agglomeration im Polymer verhindert, so dass die Magnesiumhydroxidpartikel nach der Einarbeitung desagglomeriert und homogen verteilt in der Polymermatrix vorliegen. Auch können diese Dispergiermittel B für wässrige Lösungsmittel weitere reaktive Endgruppen enthalten und somit funktionalisiert sein. Diese funktionalisierten Gruppen umfassen Hydroxygruppen aber auch Doppelbindungen, Amin- und Thiolgruppen. Mit Hilfe dieser funktionellen Gruppen kann eine spätere kovalente Verknüpfung mit den Komponenten des Polymers erfolgen, z.B. OH-Gruppen mit einem Diisocyanat unter Bildung eines Polyurethans.

Das Dispergiermittel B weist eine gute Wasserlöslichkeit auf, da dieses erfindungsgemäß entweder in dem Reaktionsgemisch zur Herstellung der Magnesiumhydroxidpartikel vorliegt bzw. der wässrigen Suspension oder Dispersion der Magnesiumhydroxidpartikel in dem wässrigen Lösungsmittel hinzugefügt wird.

Die Menge des Dispergiermittels B kann variieren. Üblicherweise liegt das Dispergiermittel B in einer Konzentration von 0,1 bis 20 Gew.-% bezogen auf den Feststoffgehalt an Mg(OH)₂ vor.
Geeignete Dispergiermittel B, die in wässrigen Lösungsmitteln verwendet werden können, umfassen Polyacrylate, wie z.B. Sokalan^{®} PA (BASF), Polyethercarboxylate, wie z.B. Melpers^{®} 0030 (BASF), Phosphorsäureester, wie z.B. Disperbyk^{®} 102 (Byk-Chemie), oder Polyphosphate, wie z.B. Calgon^{®} N oder hochmolekulare Polymere mit füllstoffaffinen Gruppen, z.B. als Blockcopolymer vorliegend, wie z.B. Disperbyk^{®} 190.

Bei organischen Lösungsmitteln wird das Dispergiermittel D verwendet. Das Dispergiermittel D kann niedermolekular, monomer, oligomer oder als Polymer vorliegen. Dieses Dispergiermittel D für organische Lösungsmittel weist, wie das Dispergiermittel B, eine oder mehrere anionische Gruppen auf, z.B. Sulfonat-, Sulfat-, Phosphonat-; Phosphat- oder Carboxygruppen. Sie erlauben die entsprechende Wechselwirkung mit der Oberfläche der Magnesiumhydroxidpartikel und ermöglichen es, die entstehenden Partikel elektrostatisch und/oder sterisch zu stabilisieren und somit eine Reagglomeration zu verhindern.

Diese stabilisierenden Dispergiermittel D können Haupt- und gegebenenfalls zusätzliche oligomere oder polymere Seitenketten enthalten, die zum einen eine sterische Stabilisierung ermöglichen und zum anderen eine oder mehrere Endgruppen tragen können, die in der Lage sind, mit dem Zielpolymer zu interagieren und gegebenenfalls kovalent mit dem Zielpolymer Verbindungen eingehen können. Diese reaktiven Endgruppen, auch als Funktionalisierung bezeichnet, sind z.B. Doppelbindungen, Hydroxy-, Amin-, Thiol-, Diisocyanat- oder Epoxy-Gruppen.

Das Dispergiermittel D kann entweder niedermolekular, monomer, oligomer oder als Polymer vorliegen. Die Seitenketten können aus hydrophoben und/oder hydrophilen Teilstrukturen bestehen.

Das sterisch stabilisierende Dispergiermittel D wird in Konzentrationen von 0,1 bis 20 Gew.-% bezogen auf den Feststoffgehalt an Mg(OH)₂ eingesetzt.

Beispiele für das Dispergiermittel D sind Phosphorsäureester - z.B. Disperbyk^{®} 106 (Byk-Chemie), Silane, z. B. Glymo^{®} (Degussa) und Titanate, z.B. Ken-react CP-03^{®} (Kenrich-Petrochemicals). Aber auch das als Dispergiermittel B genannte Polyethercarboxylat Melpers^{®} 0030 (BASF) kann als Dispergiermittel D eingesetzt werden, da Melpers^{®} 0030 auch in organischen Lösungsmitteln, wie z.B. n-Butanol, löslich ist.

In einer ersten Ausführungsform des Verfahrens zum Herstellung von aushärtbaren Massen werden die nanoskaligen, pregecoateten Magnesiumhydroxidpartikel in getrockneter Form, d.h. in Pulverform verwendet, wenn im organischen Lösungsmittel weitergearbeitet werden soll. Es können aber auch für wässrige Systeme z.B. die direkt in der Fällungsreaktion erhaltenen Suspensionen oder Dispersionen verwendet werden. Diese enthalten gegebenenfalls noch den Wachstumsinhibitor A, wie weiter unten erläutert, das Dispergiermittel B und/oder die wässrige Stearatlösung C.
Bevorzugte organische Lösungsmittel, die erfindungsgemäß in den gesamten Verfahren eingesetzt werden können, sind z.B. Ethanol, Isopropanol, Butanol, Methylethylketon, Aceton, Ethylacetat, Cyclohexan, Hexan oder Siedegrenzbenzin. Anschließend wird diese Suspension oder Dispersion mit Ultraschall in Anwesenheit des vorgenannten Dispergiermittels B oder D behandelt. Alternativ kann eine Behandlung mittels Perlmahlung der Suspension oder Dispersion in Anwesenheit von einem Dispergiermittel B oder D erfolgen. Dadurch wird eine Dispersion in einem wässrigen oder organischen Lösungsmittel enthaltend desagglomerierte, nanoskalige, mehrfach gecoatete und gegebenenfalls funktionalisierte Magnesiumhydroxidpartikel mit dem Dispergiermittel B oder Dispergiermittel D beschichtet, erhalten. Diese Dispersion wird als solche mit einer Komponente der aushärtbaren Masse, z.B. Harz oder Härter, mittels bekannter Verfahren vermischt.

Anschließend kann das wässrige oder organische Lösungsmittel aus der Mischung einer Komponente der aushärtbaren Masse und der Dispersion enthaltend desagglomerierte, nanoskalige, mehrfach gecoatete und funktionalisierte Magnesiumhydroxidpartikel, entfernt werden. Dieses Entfernen kann mit üblichen Mitteln erfolgen, wie z.B. unter Vakuum. Das Lösungsmittel kann z.B. mittels eines Rotationsverdampfers abgezogen werden.

In einer zweiten Ausführungsform wird als Ausgangsmaterial das aus dem ersten Verfahrensschritt, der In-situ-Fällung, erhaltene nanoskaligen, pregecoatete Magnesiumhydroxid als Suspension oder Dispersion in einem wässrigen Dispersionsmittel oder in getrockneter Form bereitgestellt. Bevorzugt handelt es sich bei dem Ausgangsmaterial um das pregecoatete Produkt, das direkt nach der Fällungsreaktion erhalten wurde, d.h. das Reaktionsgemisch enthaltend Dispergiermittel B gegebenenfalls weiterhin enthaltend den Wachstumsinhibitor A. Dieser Wachstumsinhibitor A ist z.B. einer wie er im Stand der Technik beschrieben ist, z.B. in der DE 103 57 116 A1.

Diese Suspension oder Dispersion welche aus der In-situ-Fällung erhalten wird, kann direkt der Behandlung mit Ultraschall oder der Perlmahlung unterworfen werden, gegebenenfalls wird weiteres Dispergiermittel B hinzugefügt, um die gewünschten Eigenschaften der Magnesiumhydroxidpartikel zu erzielen und um eine Reagglomeration zu verhindern.

Natürlich können die mit Wachstumsinhibitor A und/oder Dispergiermittel B hergestellten gecoateten Primärpartikel auch zuvor getrocknet werden, und dann als Pulver in den erfindungsgemäßen Verfahren eingesetzt werden. Dann ist ein anschließendes Dispergieren bzw. Suspendieren in einem wässrigen oder organischen Lösungsmittel und Zugabe des Dispergiermittels B oder D vor der Behandlung mit Ultraschall bzw. Perlmahlung notwendig.

Die nach Perlmahlung oder Ultraschallbehandlung erhaltenen nanoskaligen, gecoateten, desagglomerierten und gegebenenfalls funktionalisierten Magnesiumhydroxidpartikel werden in einer Menge von 0,5 bis 70 Gew.-% bezogen auf das Gesamtgewicht des fertigen, gefüllten Polymers (ausgehärtete Masse oder verfilmte Polymerdispersion) hinzugefügt.

Die der härtbaren Masse zugemischten Magnesiumhydroxidpartikel weisen dabei bevorzugt eine mittlere Partikelgröße von < 2000 nm, wie ≤ 500 nm, z.B. ≤ 200 nm, insbesondere eine nanoskalige Partikelgröße von ≤ 100 nm, wie kleiner 50 nm auf.

Insbesondere ist unter härtbare Masse eine Zusammensetzung zu verstehen, die nach Polymerisation einen polymeren Werkstoff ausbildet. Bevorzugte härtbare Massen sind zwei Komponentensysteme, die aus einer Harzkomponente und einer Härterkomponente hergestellt werden.
Als Beispiel können Epoxide, ungesättigte Polyester, Methylmethacrylate und Methylacrylate, Acrylate, Melamine sowie Urethanharze, um polymere Werkstoffe - enthaltend Polymere auf Basis von Epoxid-Harzen, ungesättigten Polyesterharzen, Polymethyl(meth)acrylaten oder Poly(meth)acrylaten, Melaminharzen und Polyurethanen - bereitzustellen.

In einem weiteren Aspekt richtet sich die vorliegende Erfindung auf ein Verfahren zum Herstellen dieser ausgehärteten Polymerwerkstoffe umfassend die Schritte
a) Bereitstellen von nanoskaligen, einzeln precoateten Magnesium-hydroxidpartikeln in getrockneter Form,
b) Dispergieren oder Suspendieren der Magnesiumhydroxidpartikel in einem organischen Lösungsmittel,
c1) Perlmahlung der Suspension oder Dispersion in Anwesenheit von einem Dispergiermittel D, oder alternativ,
c2) Behandeln der Suspension oder Dispersion mit Ultraschall in Anwesenheit von einem D,
d1) Vermischen der im Schritt c1) erhaltenen Suspension oder Dispersion enthaltend desagglomerierte, nanoskalige, mehrfach gecoatete und vorzugsweise funktionalisierte Magnesiumhydroxidpartikel mit einer Komponente einer härtbaren Masse,
d2) Vermischen der im Schritt c2) erhaltenen Suspension oder Dispersion enthaltend desagglomerierte, nanoskalige, mehrfach gecoatete und vorzugsweise funktionalisierte Magnesiumhydroxidpartikel mit einer Komponente einer härtbaren Masse,
e) Zugabe eines Harzes und/oder Härters zu der Mischung aus Schritt d1) oder d2), wobei die Zugabe des Harzes und/oder Härters zeitgleich mit der Zugabe der Dispersion/Suspension oder vor dieser erfolgen kann und
f) Aushärten der im Schritt d) bzw. e) erhaltenen härtbaren Masse.
Die Magnesiumhydroxidpartikel-Dispersionen, welche nach Verfahrensschritt c1) oder c2) hergestellt wurden, weisen einen Feststoffgehalt von 20-70 Gew.-% an Magnesiumhydroxid auf.
In einem weiteren Aspekt betrifft die vorliegende Erfindung die härtbaren Massen erhältlich mit dem erfindungsgemäßen Verfahren, wobei die aushärtbare Masse mindestens eine Komponente mit desagglomerierten, nanoskaligen, einfach oder mehrfach gecoateten Magnesiumhydroxidpartikel enthält. Bevorzugt handelt es sich bei diesen aushärtbaren Massen, um polymere Werkstoffe enthaltend Epoxid-Harze, ungesättigte Polyesterharze, Polymethyl(meth)acrylate oder Poly(meth)acrylate, Melaminharze oder Polyurethane herzustellen.

In einer bevorzugten Ausführungsform sind die erfindungsgemäßen polymeren Werkstoffe Duroplaste oder Thermoplaste.

In einem weiteren Aspekt richtet sich die vorliegende Erfindung auf Kompositmaterialien, enthaltend eine aushärtbare Masse oder einen Polymerwerkstoff gemäß der vorliegenden Erfindung, sowie ein Verstärkungsmittel. Dieses Kompositmaterial ist z.B. ein solches, das erfindungsgemäß erhältliche Duroplaste oder Thermoplaste oder andere polymere Werkstoffe aus Epoxidharzen, ungesättigten Polyesterharzen, Polymethyl(meth)acrylaten oder Poly(meth)acrylaten, Melaminharzen oder Polyurethanen enthält. Als Verstärkungselemente können dabei solche eingesetzt werden, wie Fasern von Glasfasern, Carbonfasern oder Aramidfasern, welche in die Polymermatrix eingebettet werden. Es kann sich dabei auch um Laminate handeln, dabei sind Fasern oder ein Gewebe in einer Polymermatrix in individuellen Schichten zusammengefügt.

Die Herstellung des Komposits erfolgt nach bekannten Methoden, beispielsweise durch Nasslaminieren, durch Infusion oder über Prepregs.

Die erfindungsgemäßen polymeren Werkstoffe, wie die Duroplasten oder Thermoplasten, oder das erfindungsgemäße Kompositmaterial können als Leichtbauwerkstoff, insbesondere im Bootsbau, bei Windkraftanlagen, für den Rohrbau, im Flugzeugbau, im Fahrzeugbau usw. eingesetzt werden. Dabei zeichnen sich die erhaltenen Werkstoffe und Komposite durch verbesserte mechanische Eigenschaften aus, insbesondere durch eine erhöhte Bruchdehnung und Schlagbiegefestigkeit sowie einer Erhöhung des E-Moduls. Des Weiteren sind diese polymeren Werkstoffe und Komposite aus wirtschaftlicher Sicht im großtechnischen Maßstab kostengünstig herzustellen.

Brandschutzmittel, die die erfindungsgemäßen nanoskalig gefüllten polymeren Werkstoffe enthalten, sind aufgrund ihrer mechanischen Eigenschaften Brandschutzmitteln, welche grobe Partikel im µm-Maßstab enthalten, überlegen. Insbesondere auch aufgrund des Kristallwassers, welches in den Nanopartikeln enthalten ist, kann im Falle eines Brandes dieses wegen der großen Oberfläche besonders schnell abgegeben werden. Somit kann eine Kühlung des Polymers zügig erfolgen und anschließend eine schützende Oxidschicht ausgebildet werden. Dadurch können hervorragende Brandschutzklassen erzielt werden. Insbesondere können hohe Mengen an Füllstoffen in die Polymere eingearbeitet werden, wie Füllstoffgehalte von mindestens 50 Gew.-%, die ansonsten zu einer Versprödung des Kunststoffes sowie geringem Impact-Vermögen und geringen Reißdehnungswerten führen würden.

Zusätzlich ist eine Einarbeitung von wässrigen Magnesiumhydroxid Suspensionen oder Dispersionen, welche durch die beschriebenen Verfahren der in-situ-Fällung oder der Ultraschallbehandlung bzw. Perlmahlung erhältlich sind, in wässrige Polymerdispersionen denkbar. Hierbei kann es sich beispielsweise um Klebstoffdispersionen auf Basis von Polyvinylacetaten, Polyacrylaten und Polyurethanen, sowie Mischungen davon handeln.

Härtbare Massen, die nanoskalige Partikel, insbesondere Partikel auf der Basis von Siliziumdioxid oder Aluminiumtrioxid enthalten, sind seit langem bekannt. So werden in den Anmeldungen EP 1 179 575, WO 00/35599, WO 99/52964, WO 99/54412, WO 99/52964, DE 197 26 829 oder DE 195 40 623 solche Zusammensetzungen beschrieben. Sie dienen der Herstellung von hochkratzfesten Beschichtungen.

Aus der europäischen Patentanmeldung EP 0 943 664 sind weiterhin Nanopartikel enthaltende, transparente Lackbindemittel bekannt, die, bezogen auf die Lackfestkörper, 0,5 bis 25 Gew.-% von als Feststoff eingearbeitete, primär nanoskalige Partikel enthalten und durch Düsenstrahl-Dispergierung der nanoskaligen Partikel im Bindemittel hergestellt werden. Durch die einfache Einarbeitung der nanoskaligen Partikel wird die Kratzfestigkeit der aus den gehärteten Lackbindemitteln hergestellten gehärteten Massen erhöht.

Bisher wurden die Nanopartikel als getrocknete oder gemahlene Pulver in die härtbaren Massen eingearbeitet. Allerdings konnte trotz intensiver Durchmischung z.B. mittels eines Dissolvers oder eines Ultraturrax eine vollständige Desagglomerierung der im Pulver vorhandenen Agglomerate nicht erzielt werden. Die nach der Polymerisation erhaltenen polymeren Werkstoffe wiesen daher agglomerierte Nanopartikel im Mikrometerbereich auf. Entsprechend wurden die gewünschten mechanischen Verbesserungen nicht erzielt, vielmehr waren die mechanischen Eigenschaften dieser Werkstoffe ähnlich denen mit grobskaligen Füllstoffen im Mikrometerbereich. Diese Agglomeratbildung hat ebenso wie die groben Füllstoffe ein Verspröden des Werkstoffes zur Folge: dieses ist gekennzeichnet durch ein geringes Impact-Verhalten und eine geringe Bruchdehnung.

Da als Ausgangssubstanz nicht nanoskaliges getrocknetes Pulver, sondern eine nanoskalige Suspension oder Dispersion, in der die Teilchen bereits desagglomeriert, gecoatet und gegebenenfalls funktionalisiert vorliegen, in die aushärtbare Masse eingemischt werden, wird diese Agglomeratbildung bzw. Nichtauflösung der Agglomerate vermieden.

Zum Beispiel wird eine Perlmahlung von Magnesiumhydroxidpartikeln in n-Butanol als Lösungsmittel und einem Polyethercarboxylat, wie Melpers 0030^{®} (BASF) als Dispergiermittel D durchgeführt. Nach der Perlmahlung wird eine nanoskalige, desagglomerierte, gecoatete und funktionalisierte Magnesiumhydroxid-Dispersion erhalten mit einem Feststoffgehalt von zum Beispiel ca. 50 Gew.-% bezogen auf den Feststoffgehalt an Mg(OH)₂. Das verwendete Dispergiermittel D ist von der Polarität auf das Epoxid abgestimmt. Dadurch kann die Dispersion mit einem Bis-A-Epoxidharz, wie Araldit LY 556, Huntsman, kombiniert und anschließend durch simples Rühren homogenisiert werden. Das Lösungsmittel, hier n-Butanol, kann anschließend zum Beispiel mittels eines Rotationsverdampfers abgezogen werden. Zurück bleibt ein mit desagglomerierten, gecoateten und vorzugsweise funktionalisierten Nanopartikeln von Magnesiumhydroxid gefülltes Harz. So können sogenannte "Masterbatche" erzeugt werden, die als "Konzentrate" einen hohen anorganischen Füllgrad (über 50 Gew.-%) aufweisen und mit dem Reinharz einfach herunterverdünnt werden können.

Die Perlmahlung kann auch in Methylethylketon als organisches Lösungsmittel mit einem Epoxy-funktionalisierten Silan, wie Glymo^{®} (Degussa) als Dispergiermittel D durchgeführt werden. Hierzu werden die bereitgestellten nanoskaligen, pregecoateten Magnesiumhydroxidpartikel in getrockneter Form in Methylethylketon suspendiert bzw. dispergiert. Das Dispergiermittel D wird dem Lösungsmittel vorher oder während des Dispergierens hinzugefügt. Nach der Mahlung wird eine nanoskalige, desagglomerierte, gecoatete und funktionalisierte Magnesiumhydroxid-Dispersion erhalten mit einem Feststoffgehalt von z.B. ca. 50 Gew.-%. Das verwendete Dispergiermittel D ist von der Polarität auf das Epoxidharz abgestimmt. Dadurch kann diese Dispersion mit einem Bis-A-Epoxidharz kombiniert und anschließend durch simples Rühren homogenisiert werden. Das Lösungsmittel wird gegebenenfalls mittels eines Rotationsdampfers abgezogen. Übrig bleibt ein mit desagglomerierten, gecoateten und funktionalisierten Nanopartikeln aus Magnesiumhydroxid gefülltes Harz.
Die Partikel werden mit Glymo^{®} beschichtet und tragen somit reaktive Epoxy-Gruppen auf ihrer Oberfläche, ebenso wie das Harz. Diese reaktionsfreudigen Epoxy-Gruppen des Glymos^{®} können zügig mit den Amin- oder Anhydridgruppen des Härters reagieren. Somit werden die Magnesiumhydroxidpartikel über das Additiv kovalent an die Polymermatrix angebunden, was einen signifikanten Vorteil gegenüber den im Stand der Technik verwendeten Melpers 0030^{®} darstellt. Überraschenderweise wurde beobachtet, dass die mit Melpers 0030^{®} beschichteten Magnesiumhydroxid-Partikel, welche bedingt durch das Additiv Hydroxy-Gruppen tragen, nicht mit dem Epoxidharz reagieren und dieses aushärten.

Auch eine Einarbeitung in einen N-enthaltenden Härter, ob aromatisch, aliphatisch oder cyclisch, bzw. Gemische hiervon, ist denkbar. Diese N-enthaltenden Härter können primäre oder sekundäre Amingruppen, Polyamine oder Aminoverbindungen aufweisen. Beispielhaft soll eine Perlmahlung von Magnesiumhydroxidpartikeln in Ethanol als Lösungsmittel und einem Amino-funktionalisiertem Silan, wie Ameo^{®} von Degussa, als Dispergiermittel genannt werden. Die erfindungsgemäß erhaltene Dispersion mit Magnesiumhydroxidpartikeln enthält diese mit einem Feststoffgehalt von rund 50 Gew.-%. Das verwendete Dispergiermittel D ist von der Polarität auf den Härter abgestimmt, d.h. es weist eine ähnliche Polarität auf. Dadurch kann diese Dispersion mit dem Härter, wie einem Isophorondiamin oder Dicyandiamin, kombiniert und anschließend durch simples Rühren homogenisiert werden. Gegebenenfalls wird das Lösungsmittel, wie Ethanol, mittels eines Rotationsverdampfers abgezogen. Es bleibt ein mit desagglomerierten, gecoateten und funktionalisierten Nanopartikeln aus Magnesiumhydroxid gefüllter Härter übrig. Dieser kann dann weiter mit dem Harz verarbeitet werden, um erfindungsgemäße duroplastische, polymere Werkstoffe zu erhalten.

Diese beschriebenen Einbringungsverfahren, bei denen die Nanopartikel im Masterbatch desagglomeriert und gegebenenfalls funktionalisiert vorliegen, können auch auf andere härtbare Massen übertragen werden. Es ist allerdings zu beachten, dass zum einen die Polarität des Dispergiermittels B oder Dispergiermittels D an die des Zielpolymers anzugleichen ist und zum anderen die funktionellen reaktiven Gruppen des Additivs auf das Zielpolymer abgestimmt werden müssen. So eignen sich beispielsweise für die Einarbeitung in ungesättigte Polyesterharze, die meist einen hohen Styrolanteil enthalten und radikalisch ausgehärtet werden, als Dispergiermittel D Ken-React CP-03^{®} (Kenrich Petrochemicals), Solplus C800^{®} (Lubrizol) oder VTMO^{®} (Degussa). Diese genannten Additive weisen Doppelbindungen auf, die bei der radikalischen Aushärtung in die Polymermatrix einpolymerisiert werden und haben eine ähnliche Polarität im Vergleich zu ungesättigten Polyesterharzen.

Bei dem Einsatz in Polyolen, wie für die Herstellung von Polyurethanen, sind solche Additive zu verwenden, die terminale OH-Gruppen mit einer der Polyole ähnlichen Polarität aufweisen. Zum Beispiel kann hier das Disperbyk 102^{®} (Byk-Chemie) als Dispergiermittel D verwendet werden, dieses enthält OH-Gruppen als Funktionalität im Molekül.

Durch die genannten Verfahren können sogenannte Masterbatche erzeugt werden, die als "Konzentrate" (gefüllte Harz- oder Härterkonzentrate) einen hohen anorganischen Füllgrad mit grösser 50 Gew.-% Magnesiumhydroxid) aufweisen und mit Reinharz einfach herunterverdünnt werden können. Die mit dem erfindungsgemäßen Verfahren hergestellten Masterbatche weisen einen Füllstoffgehalt von 20 bis 95 Gew.-% Magnesiumhydroxid auf.

In einer weiteren Ausführung des erfindungsgemäßen Verfahrens wird ein so genannter Reaktivverdünner als Lösungsmittel für die Perlmahlung oder die Ultraschallbehandlung eingesetzt. Dieser Reaktivverdünner nimmt an der Härtungsreaktion teil und wird in das molekulare Polymernetzwerk eingebaut. Reaktivverdünner sind im Stand der Technik bekannt, sie sind meist niedrigviskose Glycidylether von monofunktionellen bzw. difunktionellen aliphatischen Alkoholen oder Alkylphenolen. Die in der Praxis zugesetzten Mengen liegen im Allgemeinen zwischen 5 Gew.-% und 30 Gew.-% bezogen auf den Anteil des Basisharzes und richten sich nach der Einstellung des Optimums an niedriger Verarbeitungsviskosität und ausreichenden Endeigenschaften.

Die Reaktivverdünner können dabei gleichzeitig die Funktion eines organischen Lösungsmittels einnehmen. Geeignete Reaktivverdünner sind Diglycidyle oder Diamine, z.B. Hexandiglycidylether, Rütapox-EPD HD, der Firma Hexion. Es können hochgefüllte "Nano-Pasten" mit Füllgraden von z.B. 50 bis 80 Gew.-% generiert werden, die dann bei dem Verbraucher selbst auf die gewünschte Konzentration herunterverdünnt werden können.

Aber nicht nur Suspensionen oder Dispersionen in organischen Lösungsmitteln, sondern auch in wässrigen Lösungsmitteln können verarbeitet werden. So ist die Einarbeitung einer wässrigen, nanoskaligen, gecoateten, desagglomerierten Magnesiumhydroxid-Dispersion in eine wässrige Kunststoffdispersion möglich. Bei dieser Kunststoffdispersion kann es sich um eine auf Polyacrylat oder Polyvinylacetat- oder Urethanbasis, oder Mischungen hiervon, handeln. Dafür wird eine wässrige, nanoskalige, gecoatete desagglomerierte Magnesiumhydroxid-Dispersion mit z.B. Melpers 0030<(R)> als Dispergiermittel B in einer gewünschten Konzentration zu der Kunststoffdispersion gegeben. Im Allgemeinen zeichnet sich eine Verträglichkeit der Kunststoffdispersion mit der Magnesiumhydroxid Suspension oder Dispersion dadurch aus, dass es weder zu einer Koagulatbildung noch zu einer Veränderung der Viskosität kommt. In dünnen

Schichten sollte nach der Kombination der Kunststoffdispersion und der Magnesiumhydroxid-Dispersion eine optische Transparenz erhalten bleiben. Meist sichtbar durch einen Rotschimmer. Lässt man die Dispersionen verfilmen, so bilden sich transparente Polymerfilme, gefüllt mit nanoskaligem, gecoatetem, desagglomeriertem und homogen verteiltem Magnesiumhydroxid.

Im Folgenden wird die Erfindung mit Hilfe von Beispielen weiter dargestellt. Diese Beispiele dienen der weiteren Erläuterung der Erfindung ohne sie hierauf zu begrenzen.

### Beispiele

### Beispiel 1

Als Edukt wird pulverförmiges, grobskaliges oder nanoskaliges Magnesiumhydroxid verwendet, bevorzugt in pregecoateter Form.

Das getrocknete Magnesiumhydroxid wurde mittels einer Ringsiebmühle (200 µm-Sieb) vorgemahlen. Nach der Mahlung wies das Pulver eine mittlere Teilchengröße von 6,85 µm auf (bestimmt mittels Beckmann Coulter LS 13320 gemäß den Anweisungen des Herstellers).

Das erhaltene vorgemahlene Magnesiumhydroxid wurde unter Rühren eines Labordissolvers (IKA, Deutschland) und unter Zugabe von Methylethylketon zu einer organischen Suspension verarbeitet. Um die Viskosität zu erniedrigen, wurde ein sterisch stabilisierendes Dispergiermittel D zugegeben, das auch das spätere Reagglomerieren aufgebrochener Magnesiumhydroxidpartikel verhindert. Das Dispergiermittel, Dynasylan^{®} Glymo, wurde in einer Menge von 3 Gew.-% bezogen auf den Feststoffgehalt an Magnesiumhydroxid hinzugefügt. Nachdem im Dissolver eine homogene Suspension mit einem Feststoffgehalt von 20 Gew.-% Magnesiumhydroxid hergestellt wurde, wurde diese mittels einer Rührwerkskugelmühle AH 90, Hosokawa Alpine AG, weiter aufgemahlen. Der Verlauf des Mahlprozesses wurde durch Bestimmung der Partikelgrößenverteilung mittels Beckmann Coulter LS 13320 verfolgt. Es wurde eine organische, gecoatete, desagglomerierte und funktionalisierte Magnesiumhydroxid-Dispersion mit einem mittleren Teilchendurchmesser von 150 nm erhalten.

Anschließend wurde diese Dispersion mit einem Bisphenol-A-Harz - z.B. Huntsmann Araldite LY 556 - kombiniert und mittels eines Laborrührers homogenisert. Das Lösungsmittel Methylethylketon wurde mittels eines Rotationsverdampfers unter Vakuum (40 mbar) bei 45°C entfernt.
Es blieb ein mit gecoateten und desagglomerierten und funktionalisierten Magnesiumhydroxidpartikeln gefülltes Epoxidharz zurück, welches mit Reinharz beliebig herunterverdünnt werden konnte.

### Beispiel 2

Als Edukt wird pulverförmiges, grobskaliges oder nanoskaliges Magnesiumhydroxid verwendet, bevorzugt in pregecoateter Form.

Das getrocknete Magnesiumhydroxid wurde mittels einer Ringsiebmühle (200 µm-Sieb) vorgemahlen. Nach der Mahlung wies das Pulver eine mittlere Teilchengröße von 6,85 µm auf (bestimmt mittels Beckmann Coulter LS 13320 gemäß den Anweisungen des Herstellers).

Das erhaltene vorgemahlene Magnesiumhydroxid wurde unter Rühren mit einem Labordissolver (IKA, Deutschland) und unter Zugabe von Isopropanol zu einer organischen Suspension verarbeitet. Um die Viskosität zu erniedrigen, wurde ein sterisch stabilisierendes Dispergiermittel D zugegeben, das auch das spätere Reagglomerieren aufgebrochener Magnesiumhydroxidpartikel verhindert. Das Dispergiermittel, Dynasylan^{®} Ameo, wurde in einer Menge von 3 Gew.-% bezogen auf den Feststoffgehalt an Magnesiumhydroxid hinzugefügt. Nachdem im Dissolver eine homogene Suspension mit einem Feststoffgehalt von 20 Gew.-% Magnesiumhydroxid hergestellt wurde, wurde diese mittels einer Rührwerkskugelmühle AH 90, Hosokawa Alpine AG, weiter aufgemahlen. Der Verlauf des Mahlprozesses wurde durch Bestimmung der Partikelgrößenverteilung mittels Beckmann Coulter LS 13320 verfolgt. Es wurde eine organische, gecoatete, desagglomerierte und funktionalisierte Magnesiumhydroxid-Dispersion mit einem mittleren Teilchendurchmesser von 145 nm erhalten.

Anschließend wurde diese Dispersion mit einem aminischen Härter - z.B. Isophorondiamin - kombiniert und mittels eines Laborrührers homogenisert. Das Lösungsmittel Isopropanol wurde mittels eines Rotationsverdampfers unter Vakuum (40 mbar) bei 45°C entfernt.
Es blieb ein mit gecoateten und desagglomerierten und funktionalisierten Magnesiumhydroxidpartikeln gefüllter Härter zurück, der mit der Reinsubstanz beliebig herunterverdünnt werden konnte.

### Beispiel 3

Als Edukt wurde pulverförmiges, grobskaliges oder nanoskaliges Magnesiumhydroxid verwendet, bevorzugt in pregecoateter Form.

Das getrocknete Magnesiumhydroxid wurde mittels einer Ringsiebmühle (200 µm-Sieb) vorgemahlen. Nach der Mahlung wies das Pulver eine mittlere Teilchengröße von 6,85 µm auf (bestimmt mittels Beckmann Coulter LS 13320 gemäß den Anweisungen des Herstellers).

Das erhaltene vorgemahlene Magnesiumhydroxid wurde unter Rühren mit einem Labordissolver (IKA, Deutschland) und unter Zugabe von Wasser zu einer wässrigen Suspension verarbeitet. Um die Viskosität zu erniedrigen, wurde ein sterisch stabilisierendes Dispergiermittel B zugegeben, das auch das spätere Reagglomerieren aufgebrochener Magnesiumhydroxidpartikel verhindert. Das Dispergiermittel, Melpers^{®} 0030, wurde in einer Menge von 8,5 Gew.-% bezogen auf den Feststoffgehalt an Magnesiumhydroxid hinzugefügt. Nachdem im Dissolver eine homogene Suspension mit einem Feststoffgehalt von 30 Gew.-% Magnesiumhydroxid hergestellt wurde, wurde diese mittels einer Rührwerkskugelmühle AH 90, Hosokawa Alpine AG, weiter aufgemahlen. Der Verlauf des Mahlprozesses wurde durch Bestimmung der Partikelgrößenverteilung mittels Beckmann Coulter LS 13320 verfolgt. Es wurde eine organische, gecoatete, desagglomerierte und funktionalisierte Magnesiumhydroxid-Dispersion mit einem mittleren Teilchendurchmesser von 110 nm erhalten.

Anschließend wurde diese Dispersion mit einer wässrigen Klebstoffdispersion - z.B. die BASF Dispersion Luphen DS 3548 - kombiniert und mittels eines Laborrührers homogenisert. Anschließend konnte die lagerstabile, gefüllte PU-Klebstoffdispersion appliziert werden.

### Beispiel 4

Als Edukt wird pulverförmiges, grobskaliges oder nanoskaliges Magnesiumhydroxid verwendet, in pregecoateter Form.

Das getrocknete Magnesiumhydroxid wurde mittels einer Ringsiebmühle (200 µm-Sieb) vorgemahlen. Nach der Mahlung wies das Pulver eine mittlere Teilchengröße von 6,85 µm auf (bestimmt mittels Beckmann Coulter LS 13320 gemäß den Anweisungen des Herstellers).

Das erhaltene vorgemahlene Magnesiumhydroxid wurde unter Rühren mit einem Labordissolver (IKA, Deutschland) und unter Zugabe von Methylethylketon zu einer organischen Suspension verarbeitet. Um die Viskosität zu erniedrigen, wurde ein sterisch stabilisierendes Dispergiermittel D zugegeben, das auch das spätere Reagglomerieren aufgebrochener Magnesiumhydroxidpartikel verhindert. Das Dispergiermittel, Dynasylan^{®} Glymo, wurde in einer Menge von 3 Gew.-% bezogen auf den Feststoffgehalt an Magnesiumhydroxid hinzugefügt. Nachdem im Dissolver eine homogene Suspension mit einem Feststoffgehalt von 20 Gew.-% Magnesiumhydroxid hergestellt wurde, wurde diese anschließend im Kreislauf durch eine Ultraschallzelle gepumpt, in welche ein Ultraschallfinger (UIP 1000, Hielscher, Deutschland) eingetaucht war. Nach circa einer halben Stunde wurde ausgehend von 2 Litern einer 50 %igen Suspension an Edukt eine gecoatete, desagglomerierte und funktionalisierte Magnesiumhydroxid-Dispersion erhalten, die eine enge Partikelgrößenverteilung und eine mittlere Partikelgröße von 137 nm aufwies.

Anschließend wurde diese Dispersion mit einem Bisphenol-A-Harz - z.B. Huntsmann Araldite LY 556 - kombiniert und mittels eines Laborrührers homogenisert. Das Lösungsmittel Methylethylketon wurde mittels eines Rotationsverdampfers unter Vakuum (40 mbar) bei 45°C entfernt.
Es blieb ein mit gecoateten und desagglomerierten und funktionalisierten Magnesiumhydroxidpartikeln gefülltes Epoxidharz zurück, welches mit Reinharz beliebig herunterverdünnt werden konnte.

### Beispiel 5

Als Edukt wird pulverförmiges, grobskaliges oder nanoskaliges Magnesiumhydroxid verwendet, in pregecoateter Form.

Das getrocknete Magnesiumhydroxid wurde mittels einer Ringsiebmühle (200 µm-Sieb) vorgemahlen. Nach der Mahlung wies das Pulver eine mittlere Teilchengröße von 6,85 µm auf (bestimmt mittels Beckmann Coulter LS 13320 gemäß den Anweisungen des Herstellers).

Das erhaltene vorgemahlene Magnesiumhydroxid wurde unter Rühren mit einem Labordissolver (IKA, Deutschland) und unter Zugabe von Isopropanol zu einer organischen Suspension verarbeitet. Um die Viskosität zu erniedrigen, wurde ein sterisch stabilisierendes Dispergiermittel D zugegeben, das auch das spätere Reagglomerieren aufgebrochener Magnesiumhydroxidpartikel verhindert. Das Dispergiermittel, Dynasylan^{®} Ameo, wurde in einer Menge von 3 Gew.-% bezogen auf den Feststoffgehalt an Magnesiumhydroxid hinzugefügt. Nachdem im Dissolver eine homogene Suspension mit einem Feststoffgehalt von 20 Gew.-% Magnesiumhydroxid hergestellt wurde, wurde diese anschließend im Kreislauf durch eine Ultraschallzelle gepumpt, in welche ein Ultraschallfinger (UIP 1000, Hielscher, Deutschland) eingetaucht war. Nach circa einer halben Stunde wurde ausgehend von 2 Litern einer 50 %igen Suspension an Edukt eine gecoatete, desagglomerierte und funktionalisierte Magnesiumhydroxid-Dispersion erhalten, die eine enge Partikelgrößenverteilung und eine mittlere Partikelgröße von 148 nm aufwies. Anschließend wurde diese Dispersion mit einem aminischen Härter - z.B. Isophorondiamin - kombiniert und mittels eines Laborrührers homogenisert. Das Lösungsmittel Isopropanol wurde mittels eines Rotationsverdampfers unter Vakuum (40 mbar) bei 45°C entfernt.
Es blieb ein mit gecoateten und desagglomerierten und funktionalisierten Magnesiumhydroxidpartikeln gefüllter Härter zurück, der mit der Reinsubstanz beliebig herunterverdünnt werden konnte.

### Beispiel 6

Als Edukt wird pulverförmiges, grobskaliges oder nanoskaliges Magnesiumhydroxid verwendet, in pregecoateter Form.

Das getrocknete Magnesiumhydroxid wurde mittels einer Ringsiebmühle (200 µm-Sieb) vorgemahlen. Nach der Mahlung wies das Pulver eine mittlere Teilchengröße von 6,85 µm auf (bestimmt mittels Beckmann Coulter LS 13320 gemäß den Anweisungen des Herstellers).

Das erhaltene vorgemahlene Magnesiumhydroxid wurde unter Rühren mit einem Labordissolver (IKA, Deutschland) und unter Zugabe von Wasser zu einer wässrigen Suspension verarbeitet. Um die Viskosität zu erniedrigen, wurde ein sterisch stabilisierendes Dispergiermittel B zugegeben, das auch das spätere Reagglomerieren aufgebrochener Magnesiumhydroxidpartikel verhindert. Das Dispergiermittel, Melpers^{®} 0030, wurde in einer Menge von 8,5 Gew.-% bezogen auf den Feststoffgehalt an Magnesiumhydroxid hinzugefügt. Nachdem im Dissolver eine homogene Suspension mit einem Feststoffgehalt von 20 Gew.-% Magnesiumhydroxid hergestellt wurde, wurde diese anschließend im Kreislauf durch eine Ultraschallzelle gepumpt, in welche ein Ultraschallfinger (UIP 1000, Hielscher, Deutschland) eingetaucht war. Nach circa einer halben Stunde wurde ausgehend von 2 Litern einer 50 %igen Suspension an Edukt eine gecoatete, desagglomerierte und funktionalisierte Magnesiumhydroxid-Dispersion erhalten, die eine enge Partikelgrößenverteilung und eine mittlere Partikelgröße von 95 nm aufwies.

Anschließend wurde diese Dispersion mit einer wässrigen Klebstoffdispersion - z.B. die BASF Dispersion Luphen DS 3548 - kombiniert und mittels eines Laborrührers homogenisert. Anschließend konnte die lagerstabile, gefüllte PU-Klebstoffdispersion appliziert werden.

## Patentansprüche

1. Verfahren zum Herstellen von aushärtbaren Massen, enthaltend nanoskalige, gecoatete, desagglomerierte Magnesiumhydroxidpartikel umfassend die Schritte:
a) Bereitstellen von nanoskaligen, einzeln pregecoateten Magnesiumhydroxidpartikeln in getrockneter Form;
b) Dispergieren bzw. Suspendieren der Magnesiumhydroxidpartikel in einem organischen Lösungsmittel;
c1) Perlmahlung der Suspension oder Dispersion in Anwesenheit von einem Dispergiermittel D oder alternativ,
c2) Behandeln der Suspension oder Dispersion mit Ultraschall in Anwesenheit von Dispergiermittel D;
d1) Vermischen der im Schritt c1) erhaltenen Dispersion enthaltend desagglomerierte, nanoskalige, mehrfach gecoatete Magnesiumhydroxidpartikel mit einer Komponente einer aushärtbaren Masse oder alternativ,
d2) Vermischen der im Schritt c2) erhaltenen Dispersion enthaltend desagglomerierte, nanoskalige, mehrfach gecoatete Magnesiumhydroxidpartikel mit einer Komponente einer aushärtbaren Masse.

2. Verfahren zum Herstellen von gefüllten Polymerdispersionen, enthaltend nanoskalige, gecoatete, desagglomerierte Magnesiumhydroxidparikel, umfassend die Schritte
a) Bereitstellen von nanoskaligen, einzeln pregecoateten Magnesiumhydroxidpartikeln als Suspension oder Dispersion in einem wässrigen Lösungsmittel enthaltend Dispergiermittel B oder in getrockneter Form;
b) Dispergieren bzw. Suspendieren in einem wässrigen Lösungsmittel bei Einsatz von getrocknetem Magnesiumhydroxid-Pulver;
c1) Perlmahlung der Suspension oder Dispersion in Anwesenheit von einem Dispergiermittel B oder alternativ,
c2) Behandeln der Suspension oder Dispersion mit Ultraschall in Anwesenheit von Dispergiermittel B;
d1) Vermischen der im Schritt c1) erhaltenen Dispersion enthaltend desagglomerierte, nanoskalige, mehrfach gecoatete Magnesiumhydroxidpartikel mit einer wässrigen Polymerdispersion oder alternativ,
d2) Vermischen der im Schritt c2) erhaltenen Dispersion enthaltend desagglomerierte, nanoskalige, mehrfach gecoatete Magneisumhydroxidpartikel mit einer wässrigen Polymerdispersion,
e) Ausbilden des Polymers aus der im Schritt d1) und d2) so erhaltenen Polymerdispersion.

3. Verfahren zum Herstellen einer ausgehärteten Masse umfassend die Schritte a) bis d) gemäß Anspruch 1 gefolgt von den Schritten
e) Zugabe eines Harzes und/oder Härters zu der Mischung aus Schritt d1) oder d2), wobei die Zugabe des Harzes und/oder Härters zeitgleich mit der Zugabe der Dispersion/Suspension oder vor dieser erfolgen kann, und
f) aushärten der aushärtbaren Masse durch Zugabe einer geeigneten Komponente.

4. Verfahren nach einem der Ansprüche 1 bis 3, wobei die Magnesiumhydroxidpartikel in der nach Schritt c1) oder Schritt c2) erhaltenen Suspension oder Dispersion mit einem Feststoffgehalt von 20 bis 70 Gew.-% Magnesiumhydroxid enthalten sind.

5. Verfahren nach Anspruch 1 bis 4, wobei die Menge an Dispergiermittel D oder Dispergiermittel B im Schritt c1) oder c2) 0,1 bis 20 Gew.-% bezogen auf den Feststoffgehalt an Magnesiumhydroxidpartikeln beträgt.

6. Verfahren nach einem der Ansprüche 1 bis 5, wobei die Magnesiumhydroxidpartikel nach Schritt c1) oder c2) eine mittlere Partikelgröße von ≤ 500 nm, bevorzugt ≤ 100 nm, bestimmt mittels Beckmann Coulter LS 13320, aufweisen.

7. Verfahren nach einem der Ansprüche 1 bis 6, wobei das Dispergiermittel D oder Dispergiermittel B ein funktionalisiertes Dispergiermittel ist.

8. Verfahren nach einem der Ansprüche 1 bis 3, enthaltend weiterhin den Schritt des Entfernen des organischen Lösungsmittels aus der aushärtbaren Masse.

9. Verfahren nach einem der Ansprüche 1 bis 3, umfassend die Zugabe eine Reaktivverdünners zu der aushärtbaren Masse.

10. Verfahren nach einem der Ansprüche 1 bis 3, wobei das organische Lösungsmittel ein Reaktivverdünner ist.

11. Verfahren nach einem der Ansprüche 2 bis 10, wobei die nanoskaligen, gecoateten und desagglomerierten Magnesiumhydroxidpartikel in einer Menge von 0,5 bis 70 Gew.-% bezogen auf das Gesamtgewicht der ausgehärteten Masse oder der verfilmten Polymerdispersion in dieser enthalten ist.

12. Verfahren nach einem der Ansprüche 1 bis 10, wobei die nanoskaligen, gecoateten und desagglomerierten Magnesiumhydroxidpartikel in einer Menge von 20 bis 95 Gew.-% bezogen auf das Gesamtgewicht der aushärtebaren Masse enthalten ist.

13. Verfahren nach zumindest einem der Ansprüche 1, 3 bis 10 und 12, wobei die Komponenten in der aushärtbaren Masse ausgewählt sind aus Vorstufen für Epoxidharze, Melaminharze, ungesättigte Polyesterharze, Polymethyl(meth)acrylate oder Poly(meth)acrylate oder Polyurethane.

14. Aushärtbare Masse erhältlich zumindest gemäß einem der Verfahren nach Ansprüchen 1, 4 bis 10, 12, 13.

15. Ausgehärtete Masse erhältlich gemäß einem Verfahren nach zumindest einem der Ansprüche 3 bis 10 und 12 bis 13.

16. Aushärtbare Masse nach Anspruch 14 im Form eines gefüllten Duroplast oder Thermoplast.

17. Kompositmaterial enthaltend eine aushärtbare Masse oder ausgehärtete Masse nach einem der Ansprüche 14 bis 16 weiterhin enthaltend ein Verstärkungsmittel.

18. Kompositmaterial nach Anspruch 17, wobei das Verstärkungsmittel Kohlefaser, Aramidfaser oder Glasfaser ist.

19. Wässrige gefüllte Polymerdispersion, enthaltend nanoskalige, gecoatete Magnesiumhydroxidpartikel, erhältlich nach Verfahren zur Herstellung gemäß einem der Ansprüche 2, 4 bis 7 und 11.

20. Masterbatche, hergestellt durch die genannten Verfahren nach Anspruch 1 und 12, die einen Füllstoffgehalt von 20 bis 95 Gew.-% Magnesiumhydroxid aufweisen.

## Claims

1. Method for producing hardenable masses containing coarse and/or nanoscalic, coated, deagglomerated magnesium hydroxide particles comprising the steps:
a) Provision of coarse or nanoscalic, non- or pre-coated magnesium hydroxide particles in dried form,
b) Dispersing or suspending the magnesium hydroxide particles in an organic solvent,
c1) Bead milling the suspension or dispersion in the presence of a dispersing agent D or alternative,
c2) Treating the suspension or dispersion with ultrasound in the presence of dispersing agent D,
d1) Mixing the dispersion obtained in step c1), containing deagglomerated, coarse and/or nanoscalic, single- or multiple-coated magnesium hydroxide particles with a component of a hardenable mass or alternative,
d2) Mixing the dispersion obtained in step c2), containing deagglomerated, coarse and/or nanoscalic, multiple-coated magnesium hydroxide particles with a component of a hardenable mass.

2. Method for producing filled polymer dispersions, containing coarse and/or nanoscalic, coated, deagglomerated magnesium hydroxide particles comprising the steps:
a) Provision of coarse and/or nanoscalic, pre-coated magnesium hydroxide particles as suspension or dispersion in an aqueous solvent containing dispersing agent B or in dried form,
b) If applicable, dispersing or suspending in an aqueous solvent when dried magnesium hydroxide powder is used,
c1) Bead milling the suspension or dispersion in the presence of a dispersing agent B or alternative,
c2) Treating the suspension or dispersion with ultrasound in the presence of dispersing agent B,
d1) Mixing the dispersion obtained in step c1) containing deagglomerated, coarse and/or nanoscalic, single- or multiple- coated magnesium hydroxide particles with an aqueous polymer dispersion or alternative,
d2) Mixing the dispersion obtained in step c2) containing deagglomerated, coarse and/or nanoscalic, multiple-coated magnesium hydroxide particles with an aqueous polymer dispersion,
e) Formation of the polymer from the polymer dispersion obtained in steps d1) and d2).

3. Method for producing a hardened mass comprising the steps:
a) Provision of coarse and/or nanoscalic, non- or pre-coated magnesium hydroxide particles in dried form,
b) Dispersing or suspending the magnesium hydroxide particles in an organic solvent,
c1) Bead milling the suspension or dispersion in the presence of a dispersing agent D or alternative,
c2) Treating the suspension or dispersion with ultrasound in the presence of dispersing agent D,
d1) Mixing the dispersion obtained in step c1) containing deagglomerated, coarse and/or nanoscalic, single- or multiple-coated magnesium hydroxide particles with a component of a hardenable mass or alternative,
d2) Mixing the dispersion obtained in step c2) containing deagglomerated, coarse and/or nanoscalic, multiple-coated magnesium hydroxide particles with a component of a hardenable mass,
e) Addition of a resin and/or hardener to the mixture from step d1) or d2), whereby the addition of a resin and/or hardener can take place at the same time as the addition of the dispersion/suspension or before it, and
f) Hardening of the hardenable mass by adding a suitable component.

4. Method according to one of the claims1 to 3, whereby the magnesium hydroxide particles in the suspension or dispersion obtained according to step c1) or step c2) have a solids content of 20 to 70% by weight of magnesium hydroxide,

5. Method according to claim 1 to 4, whereby the quantity of dispersing agent D or dispersing agent B in step c1) or c2) is 0.1 to 20% by weight based on the solids content of magnesium hydroxide particles.

6. Method according to one of the claims 1 to 5, whereby the magnesium hydroxide particles according to step c1) or c2) have a mean particle size of ≤ 500 nm, preferably of ≤ 100 nm.

7. Method according to one of the claims 1 to 6, whereby the dispersing agent D or dispersing agent B is a functionalized dispersing agent.

8. Method according to one of the claims 1 and 3, containing furthermore the step of removal of the organic solvent from the hardenable mass.

9. Method according to one of the claims 1 and 3, comprising the addition of a reactive diluting agent to the hardenable mass.

10. Method according to one of the claims 1 and 3, whereby the organic solvent is a reactive diluting agent.

11. Method according to one of the claims 2 to 10, whereby the coarse and/or nanoscalic, coated and deagglomerated magnesium hydroxide particles are found in it in a quantity of 0.5 to 70% by weight based on the total weight of the hardened mass or of the filmed polymer dispersion.

12. Method according to one of the claims1 and 10, whereby the coarse and/or nanoscalic, coated and deagglomerated magnesium hydroxide particles are contained in a quantity of 20 to 95% by weight based on the total weight of the hardenable masses.

13. Method according to at least one of the claims 1, 3 to 10 and 12, whereby the components in the hardenable mass are selected from precursors for epoxy resins, melamine resins, unsaturated polyester resins, polymethyl (meth)acrylates or poly (meth)acrylates or polyurethanes.

14. Hardenable mass obtainable at least according to one of the methods according to claim 1 and 3 to 10, 12 and 13.

15. Hardenable mass, especially filled Duroplast or thermoplastic, obtainable according to one method according to at least one of the claims 3 to 10, 12 to 14.

16. Composite material containing a hardenable mass or hardened mass according to one of the claims 1, 3 to 10, 12 to 15 furthermore containing a reinforcing agent.

17. Composite material according to claim 16, whereby the reinforcing agent is coal fiber, aramide fiber or glass fiber.

18. Aqueous filled polymer dispersion, containing coarse and/or nanoscalic, coated magnesium hydroxide particles, obtainable according to a production method according to one of the claims 2, 4 to 7 and 11.

19. Aqueous filled polymer dispersion, containing coarse and/or nanoscalic, coated magnesium hydroxide particles, obtainable according to in-situ precipitation methods, whereby in one step i) a magnesium salt solution is brought into contact with ii) an alkali hydroxide solution to form a reaction mixture to precipitate coated magnesium hydroxide particles, **characterized in that**
at least one of the following additives A, B and C is found in at least one of the solutions i) or ii), or
when i) and ii) are brought into contact, at least one of the following additives A, B and C are brought into contact simultaneously with the reaction mixture resulting from i) and ii), whereby the additives are
- a growth inhibitor A,
- a dispersing agent B,
- an aqueous stearate solution C or mixtures thereof.

20. Master batches, produced by the above-mentioned methods according to claim 1 and 12, have a solids content of 20 to 95% by weight of magnesium hydroxide.

## Revendications

1. Procédé de fabrication de masses durcissables contenant des particules d'hydroxyde de magnésium à grosse échelle et/ou nano-échelle, revêtues, désagglomérées, comprenant comme étapes
a) la préparation de particules d'hydroxyde de magnésium à grosse échelle et/ou nano-échelle, non ou prérevêtues, sous forme séchée,
b) la dispersion ou la suspension des particules d'hydroxyde de magnésium dans un solvant organique,
c1) le broyage à perles de la suspension ou de la dispersion en présence d'un agent dispersant D ou d'une alternative,
c2) le traitement par ultrason de la suspension ou de la dispersion en présence d'agents dispersants D,
d1) le mélange de la dispersion obtenue à l'étape c1) contenant des particules d'hydroxyde de magnésium désagglomérées à grosse échelle et/ou nano-échelle revêtues une ou plusieurs fois, avec un composant d'une masse durcissable ou une alternative,
d2) le mélange de la dispersion obtenue à l'étape c2) contenant des particules d'hydroxyde de magnésium désagglomérées à grosse échelle et/ou nano-échelle revêtues plusieurs fois, avec un composant d'une masse durcissable.

2. Procédé de fabrication de dispersions polymères pleines contenant des particules d'hydroxyde de magnésium à grosse échelle et/ou nano-échelle, revêtues, désagglomérées, comprenant comme étapes
a) la préparation de particules d'hydroxyde de magnésium à grosse échelle et/ou nano-échelle, prérevêtues, en tant que suspension ou dispersion dans un solvant aqueux contenant des agents dispersants B ou sous forme séchée,
b) le cas échéant la dispersion ou la suspension dans un solvant aqueux en cas d'utilisation de poudre d'hydroxyde de magnésium séchée,
c1) le broyage à perles de la suspension ou de la dispersion en présence d'un agent dispersant B ou d'une alternative,
c2) le traitement par ultrason de la suspension ou de la dispersion en présence d'agents dispersants B,
d1) le mélange de la dispersion obtenue à l'étape c1) contenant des particules d'hydroxyde de magnésium désagglomérées à grosse échelle et/ou nano-échelle revêtues une ou plusieurs fois, avec une dispersion polymère aqueuse ou une alternative,
d2) le mélange de la dispersion obtenue à l'étape c2) contenant des particules d'hydroxyde de magnésium désagglomérées à grosse échelle et/ou nano-échelle revêtues plusieurs fois, avec une dispersion polymère aqueuse,
e) la formation du polymère à partir des dispersions polymères ainsi obtenues à l'étape d1) et d2).

3. Procédé de fabrication d'une masse durcie comprenant comme étapes
a) la préparation de particules d'hydroxyde de magnésium à grosse échelle et/ou nano-échelle, non ou prérevêtues, sous forme séchée,
b) la dispersion ou la suspension des particules d'hydroxyde de magnésium dans un solvant organique,
c1) le broyage à perles de la suspension ou de la dispersion en présence d'un agent dispersant D ou d'une alternative,
c2) le traitement par ultrason de la suspension ou de la dispersion en présence d'agents dispersants D,
d1) le mélange de la dispersion obtenue à l'étape c1) contenant des particules d'hydroxyde de magnésium désagglomérées à grosse échelle et/ou nano-échelle revêtues une ou plusieurs fois, avec un composant d'une masse durcissable ou une alternative,
d2) le mélange de la dispersion obtenue à l'étape c2) contenant des particules d'hydroxyde de magnésium désagglomérées à grosse échelle et/ou nano-échelle revêtues plusieurs fois, avec un composant d'une masse durcissable
e) l'addition d'une résine et/ou d'un durcissant au mélange obtenu à l'étape d1) ou d2), l'ajout de la résine ou du durcissant pouvant avoir lieu simultanément avec l'addition de la dispersion/suspension ou avant celle-ci, et
f) le durcissement de la masse durcissable par l'addition d'un composant approprié.

4. Procédé selon l'une des revendications 1 à 3, **caractérisé en ce que** les particules d'hydroxyde de magnésium sont contenues dans la suspension ou la dispersion obtenue après l'étape c1) ou l'étape c2) avec une teneur en matières solides de 20 à 70 % en poids.

5. Procédé selon l'une des revendications 1 à 4, **caractérisé en ce que** la quantité d'agents dispersants D ou d'agents dispersants B à l'étape c1) ou c2) est de 0,1 à 20 % en poids en fonction de la teneur en matières solides d'hydroxyde de magnésium.

6. Procédé selon l'une des revendications 1 à 5, **caractérisé en ce que** les particules d'hydroxyde de magnésium présentent, après l'étape c1) ou l'étape c2), une taille moyenne des particules ≤ 500 nm, de préférence ≤ 100 nm.

7. Procédé selon l'une des revendications 1 à 6, **caractérisé en ce que** l'agent dispersant D ou l'agent dispersant B est un agent dispersant fonctionnalisé.

8. Procédé selon l'une des revendications 1 à 3, comprenant en outre l'étape d'élimination du solvant organique de la masse durcissable.

9. Procédé selon l'une des revendications 1 à 3, comprenant l'addition à la masse durcissable d'un diluant réactif.

10. Procédé selon l'une des revendications 1 à 3, **caractérisé en ce que** le solvant organique est un diluant réactif.

11. Procédé selon l'une des revendications 2 à 10, **caractérisé en ce que** les particules d'hydroxyde de magnésium à grosse échelle et/ou nano-échelle, revêtues et désagglomérées, sont contenues à hauteur de 0,5 à 70 % en poids dans la masse durcie ou la dispersion polymère filmée en fonction du poids total de celle-ci.

12. Procédé selon l'une des revendications 1 à 10, **caractérisé en ce que** les particules d'hydroxyde de magnésium à grosse échelle et/ou nano-échelle, revêtues et désagglomérées, sont contenues à hauteur de 20 à 95 % en poids en fonction du poids total des masses durcissables.

13. Procédé selon l'une des revendications 1, 3 à 10 et 12, **caractérisé en ce que** les composants dans la masse durcissable sont choisis parmi des précurseurs de résines époxy, de résines de mélamine, de résines de polyester insaturé, de poly(méth)acrylates de méthyle ou de poly(méth)acrylates ou de polyuréthanes.

14. Masse durcissable obtenable au moins conformément à l'un des procédés selon l'une des revendications 1, 3 à 10, 12 et 13.

15. Masse durcie, en particulier duroplastique ou thermoplastique rempli, obtenable conformément à l'un des procédés selon au moins l'une des revendications 3 à 10 et 12 à 14.

16. Matériau composite contenant une masse durcissable ou une masse durcie selon l'une des revendications 1, 3 à 10 et 12 à 15 et contenant en outre un agent de renforcement.

17. Matériau composite selon la revendication 16, **caractérisé en ce que** l'agent de renforcement est en fibre de carbone, en fibre aramide ou en fibre de verre.

18. Dispersion polymère pleine contenant des particules d'hydroxyde de magnésium à grosse échelle et/ou nano-échelle, revêtues, obtenable selon le procédé de fabrication de l'une des revendications 2, 4 à 7 et 11.

19. Dispersion polymère pleine contenant des particules d'hydroxyde de magnésium à grosse échelle et/ou nano-échelle, revêtues, obtenable selon le procédé de précipitation in situ, **caractérisée en ce que** lors d'une étape i) une solution de sel de magnésium est ii) mise en contact avec une solution d'hydroxyde alcalin avec formation d'un mélange réactionnel pour la précipitation de particules d'hydroxyde de magnésium, **caractérisée en ce que** dans au moins l'une des solutions i) et ii) est contenu au moins l'un des additifs suivants A, B et C, ou, si i) et ii) sont mis en contact, au moins l'un des additifs suivants A, B et C est mis en contact avec le mélange réactionnel résultant de i) et ii), les additifs étant
- un inhibiteur de croissance A,
- un agent dispersant B,
- une solution aqueuse de stéarate C ou des mélanges de ces derniers.

20. Les mélanges-maîtres fabriqués selon les procédés des revendications 1 et 12 présentent une teneur en agents de charge de 20 à 95 % en poids d'hydroxyde de magnésium.
